# EUROPEAN PATENT SPECIFICATION

(11) **EP 3 805 972 B1**
(45) Date of publication and mention of the grant of the patent: **28.01.2026**
(21) Application number: 18933596.1
(22) Date of filing: 11.12.2018
(51) Int. Cl.: H04L 9/40, G06F 21/64, G06Q 50/06, G06Q 10/20, H02J 3/00, H04L 9/32, H04L 9/00

(54) **BLOCKCHAIN-BASED ENERGY INTERACTION DEVICE, ENERGY INTERNET SYSTEM AND INTERACTION METHOD**
VORRICHTUNG, SYSTEM UND VERFAHREN ZUR INTERAKTION MIT BLOCKIERTER ENERGIE
DISPOSITIF D'INTERACTION ÉNERGÉTIQUE BASÉ SUR UNE CHAÎNE DE BLOCS, SYSTÈME INTERNET ÉNERGÉTIQUE ET PROCÉDÉ D'INTERACTION

(30) Priority: 10.09.2018 CN 201811050636
(43) Date of publication of application: 14.04.2021
(73) Proprietor: Gree Electric Appliances, Inc. of Zhuhai, Zhuhai, Guangdong 519070 (CN)
(72) Inventor: WANG, Lingjun, Zhuhai, Guangdong 519070 (CN); XU, Fangcui, Zhuhai, Guangdong 519070 (CN); LUO, Xiao, Zhuhai, Guangdong 519070 (CN)
(74) Representative: Reddie & Grose LLP
(86) International application number: PCT/CN2018/120313
(87) International publication number: WO 2020/052125

(56) References cited:
- EP-A1- 3 764 302
- CN-A- 107 909 358
- CN-A- 107 948 300
- CN-A- 108 400 589
- CN-A- 108 400 590
- CN-A- 108 400 590
- CN-A- 108 830 110
- US-A1- 2018 130 130

## Description

### CROSS-REFERENCE TO RELATED APPLICATIONS

The present application is based on and claims the priority of Chinese application for invention 201811050636.1, filed on Sep. 10, 2018.

### TECHNICAL FIELD

The present disclosure relates to the field of energy information, and in particular to a blockchain-based energy interaction apparatus, an energy internet system, and an interaction method.

### BACKGROUND

We are now in the third industrial revolution characterized by renewable energy and the internet. The combination of distributed renewable energy technologies and the internet is revolutionizing the way of energy usage of the entire society. However, information is easy to be tampered with on the internet. Therefore, how to ensure information security in an energy internet system has become very important.

Document US20180130130A1 discloses a method. The method comprises: measuring energy metrics associated with network devices operating on a network via one or more meter devices; identifying one or more potential changes to existing energy usage of the network based on the energy metrics; logging the energy metrics and the one or more potential changes in a distributed ledger; and storing the distributed ledger in a blockchain block.

Document CN108400590A discloses a blockchain and cloud power supply-based microgrid ecosystem. The microgrid ecosystem comprises electricity generating equipment belonging to each user, an energy storage power supply based on graphene battery and used for storing electricity generated by the electricity generating equipment, an ecological management module used for realizing electronic quantities detection and power transmission, and a blockchain trading system. The blockchain trading system comprises blockchain transaction platform, trading database and electricity dispatch module, the blockchain transaction platform is used to record the electricity data detected by the electronic gene chip EBIOGEM and the electricity transaction information submitted by the user client into the transaction database; the electricity dispatch module is used for electricity dispatch on the basis of electricity transaction information in the transaction database, the electricity dispatch module realizes power transmission through the power transmission unit and the energy storage power supply, and the electricity dispatch module is connected to electricity-consuming terminals via power transmission lines.

### SUMMARY

The invention is defined by the independent claims that accompany this disclosure. Any examples and embodiments of the description not falling within the scope of the claims do not form part of the invention as defined by the independent claims.

According to one aspect of the present disclosure, a blockchain-based energy interaction apparatus is provided, which comprises: an energy information acquisition module configured to acquire energy information of an energy device; a blockchain node module configured to write the energy information into a blockchain network, and obtain an energy block from the blockchain network for information interaction.

In some embodiments, the energy interaction apparatus further comprises a communication network node module configured to perform information interaction via a communication network based on the energy block.

In some embodiments, the energy interaction apparatus further comprises an energy dispatch node module configured to perform energy dispatch by using an energy network based on interaction information.

In some embodiments, the blockchain node module is further configured to write the interaction information into the blockchain network.

In some embodiments, the energy dispatch node module is further configured to generate an energy dispatch instruction based on the interaction information; and the blockchain node module is further configured to write the energy dispatch instruction into the blockchain network.

In some embodiments, the energy dispatch node module is further configured to determine whether an energy dispatch operation is to be performed based on the energy dispatch instruction, and perform energy dispatch via the energy network if it is determined that the energy dispatch operation is to be performed; and the blockchain node module is further configured to write a result of the energy dispatch into the blockchain network.

In some embodiments, depending on different classifications of the energy information, the energy information is transmitted over different communication channels of the communication network; and/or the energy information comprises at least one of capability information, demand information, supply information, identity information, type information, voltage information, current information, power information, energy information, spatiotemporal attribute information, regulative attribute information, and response time information.

In some embodiments, the energy device is at least one of an energy storage device, a power consumption device, a power generation device, a transmission device, or a hybrid device, the hybrid device comprising at least two of a transmission apparatus, a power generation apparatus, an energy storage apparatus, and a power consumption apparatus.

In some embodiments, the transmission apparatus, the power generation apparatus, the energy storage apparatus, and the power consumption apparatus exchange information via a communication network.

In some embodiments, a predetermined number of nodes in the blockchain network are consensus nodes; and/or the blockchain node module is configured to write the energy information into the blockchain network by a central controller, wherein the central controller is used to maintain energy blocks.

According to another aspect of the present disclosure, a blockchain-based energy internet system is further provided, which comprises a plurality of energy interaction apparatuses as described above, wherein the plurality of energy interaction apparatuses are connected via a blockchain network.

In some embodiments, each of the energy interaction apparatuses is an energy device.

In some embodiments, each of the energy interaction apparatuses is a controller.

In some embodiments, the controller is at least one of a dedicated data analysis unit and an artificial intelligence unit.

In some embodiments, the energy internet system further comprises at least one of a communication network, an energy network, or a central controller, wherein the communication network is configured to perform information interaction; the energy network is configured to perform energy interaction; and the central controller is configured to maintain energy blocks.

According to another aspect of the present disclosure, a blockchain-based energy internet interaction method is further provided, which comprises: acquiring energy information of an energy device; writing the energy information into a blockchain network; and obtaining an energy block from the blockchain network for information interaction.

In some embodiments, information interaction is performed via a communication network based on the energy block.

In some embodiments, energy dispatch is performed by using an energy network based on interaction information.

In some embodiments, the interaction information is written into the blockchain network.

In some embodiments, an energy dispatch instruction is generated based on the interaction information; and the energy dispatch instruction is written into the blockchain network.

In some embodiments, it is determined whether an energy dispatch operation is to be performed based on the energy dispatch instruction; energy dispatch is performed via the energy network if it is determined that the energy dispatch operation is to be performed; and a result of the energy dispatch is written into the blockchain network.

In some embodiments, depending on different classifications of the energy information, the energy information is transmitted over different communication channels of the communication network; and/or the energy information comprises at least one of capability information, demand information, supply information, identity information, type information, voltage information, current information, power information, energy information, spatiotemporal attribute information, regulative attribute information, and response time information.

In some embodiments, the energy device is at least one of an energy storage device, a power consumption device, a power generation device, a transmission device, or a hybrid device, the hybrid device comprising at least two of a transmission apparatus, a power generation apparatus, an energy storage apparatus, or a power consumption apparatus.

In some embodiments, the transmission apparatus, the power generation apparatus, the energy storage apparatus, and the power consumption apparatus exchange information via a communication network.

In some embodiments, a predetermined number of nodes in the blockchain network are consensus nodes; and/or the energy information is written into the blockchain network by a central controller, wherein the central controller is used to maintain energy blocks.

According to another aspect of the present disclosure, a blockchain-based energy interaction apparatus is further provided, which comprises: memory; and a processor coupled to the memory, the processor configured to execute the energy internet interaction method described above based on instructions stored in the memory.

According to a further aspect of the present disclosure, there is further provided a computer readable storage medium having stored thereon computer program instructions, which when executed by a processor, implement the steps of the energy internet interaction method described above.

Other features and advantages of the present invention will become apparent from the following detailed description of exemplary embodiments of the present disclosure with reference to the accompanying drawings.

### BRIEF DESCRIPTION OF THE DRAWINGS

The accompanying drawings, which are incorporated in and constitute a portion of this specification, illustrate embodiments of the present disclosure and, together with the description, serve to explain the principles of the present disclosure.

The present disclosure will be more clearly understood from the following detailed description with reference to the accompanying drawings, in which:
FIG. 1 is a schematic structural diagram of a blockchain-based energy interaction apparatus according to some embodiments of the present disclosure;
FIG. 2 is a schematic structural diagram of a blockchain-based energy interaction apparatus according to other embodiments of the present disclosure;
FIG. 3 is a schematic structural diagram of a blockchain-based energy internet system according to some embodiments of the present disclosure;
FIG. 4 is a schematic flowchart of a blockchain-based energy internet interaction method according to some embodiments of the present disclosure;
FIG. 5 is a schematic flowchart of a blockchain-based energy internet interaction method according to other embodiments of the present disclosure;
FIG. 6 is a schematic structural diagram of a blockchain-based energy interaction apparatus according to further embodiments of the present disclosure;
FIG. 7 is a schematic structural diagram of a blockchain-based energy interaction apparatus according to still further embodiments of the present disclosure.

### DETAILED DESCRIPTION

Various exemplary embodiments of the present disclosure will now be described in detail with reference to the accompanying drawings. Notice that, unless otherwise specified, the relative arrangement, numerical expressions and numerical values of the components and steps set forth in these examples do not limit the scope of the invention.

At the same time, it should be understood that, for ease of description, the dimensions of the various parts shown in the drawings are not drawn to actual proportions.

The following description of at least one exemplary embodiment is in fact merely illustrative and is in no way intended as an limitation to the invention, its application or use.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an article is defined in a drawing, there is no need for further discussion in the accompanying drawings.

For a clear understanding of the object of the present disclosure, its technical solution and advantages, the present disclosure will be further described in detail below in conjunction with the accompanying drawings and embodiments.

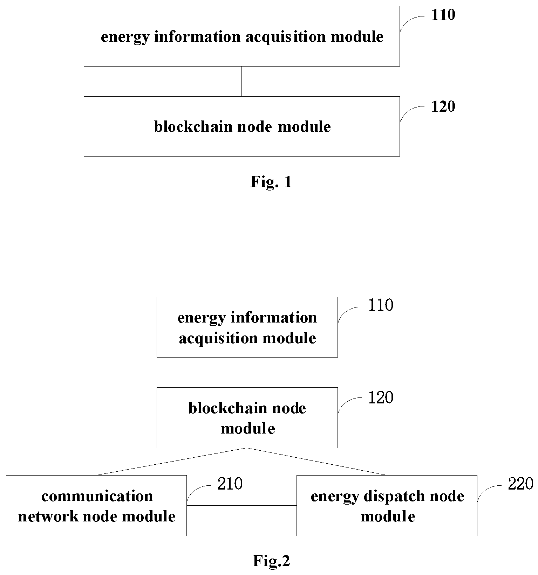

FIG. 1 is a schematic structural diagram of a blockchain-based energy interaction apparatus according to some embodiments of the present disclosure. In some embodiments, the energy interaction apparatus is an intelligent energy device with behavioral characteristics, such as an energy storage device, a power consumption device, a power generation device, a transmission device, or a hybrid device. For a non- intelligent energy device, the energy interaction apparatus is a controller separated from the energy device. The controller is, for example, a dedicated data analysis unit or an AI (Artificial Intelligence) unit. The energy interaction apparatus comprises an energy information acquisition module 110 and a blockchain node module 120.

The energy information acquisition module 110 is configured to acquire energy information of an energy device. The energy device is an energy storage device, a power consumption device, a power generation device, a transmission device, or a hybrid device, wherein the hybrid device externally acts as an integral device, comprises a transmission apparatus, a power generation apparatus, an energy storage apparatus, and a power consumption apparatus. The energy information comprises capability information, demand information, supply information, identity information, type information, voltage information, current information, power information, energy information, spatiotemporal attribute information, regulative attribute information, and response time information, etc.

The blockchain node module 120 is configured to write the energy information into a blockchain network and obtain an energy block from the blockchain network for information interaction. For example, if the energy device is an intelligent device, the energy device will upload its own energy information to the blockchain network as a blockchain node. The energy information will be released to various blockchain nodes in the blockchain network, and the blockchain nodes store the energy information as an energy block. In some embodiments, based on a smart contract, the energy information is written into an energy block as a transaction.

The interaction information comprises, for example, control information, operation information, and so on. For example, determine whether a first energy device A is to transfer energy to a second energy device B among other devices according to the energy information of the first energy device A and the energy information of other devices acquired from energy blocks, and if it is determined that the first energy device A is to transfer energy to the second energy device B, energy transfer information of the first energy device A is released to each energy device, wherein the energy transfer information comprises an ID of the second energy device B. Energy device B makes a response after receiving the energy transfer information, while other energy devices only save the energy transfer information sent by the first energy device A, without a response to the energy transfer information, however. In some embodiments, the interaction information also comprises an ON/OFF instruction, a capability increase or decrease instruction, or a configuration management instruction issued by another device.

In the above embodiment, the energy information of the energy device is written into the blockchain network. Since each blockchain node stores the same energy information, it can ensure the immutability of critical interaction information during information interaction.

FIG. 2 is a schematic structural diagram of a blockchain-based energy interaction apparatus according to other embodiments of the present disclosure. This blockchain-based energy interaction apparatus further comprises a communication network node module 210 configured to perform information interaction via a communication network. When high performance is pursued, the communication network is, for example, a communication network comprising a field bus. For example, critical information is transmitted via the field bus, which can ensure the rapid and accurate transmission of critical information to other nodes, thereby improving the information processing capability of the blockchain network.

In some embodiments, the blockchain node module 120 is further configured to write interaction information into the blockchain network. For example, a negotiated power supply relationship, a power use relationship and other agreement information is written into the blockchain network to realize the transparent flow of business information and ensure the reliability of business information deposits.

In some embodiments of the present disclosure, the energy interaction apparatus further comprises an energy dispatch node module 220, wherein the energy dispatch node module 220 is configured to perform energy dispatch based on the interaction information by utilizing the energy network. For example, the energy dispatch node module 220 is configured to generate an energy dispatch instruction based on the interaction information, and the blockchain node module 120 is configured to write the energy dispatch instruction into the blockchain network. After receiving the energy dispatch instruction, the energy dispatch node module 220 of each energy device determines whether an energy dispatch operation is to be performed based on the energy dispatch instruction, and performs the energy dispatch operation via the energy network if it is determined that the energy dispatch operation is to be performed. The block chain node module 120 writes a result of the energy dispatch into the blockchain network, that is, it stores activity information about agreement execution in the blockchain network.

For example, if a power consumption device needs 100 kwh of electric energy, and it is determined that power generation device C or energy storage device D can be required to provide 100kwh of electric energy based on interaction information, upon the generation of an energy dispatch instruction, the power consumption device will issue an energy dispatch instruction to the blockchain network. If energy storage device D cannot carry out this dispatch operation for some reasons, power generation device C can make a response via a fieldbus communication network and can dispatch 100kwh of electric energy to the power consumption device. Accordingly, power generation device C transmits 100kwh of electric energy to the power consumption device via the energy network.

For another example, power generation device C receives a dispatch energy request from a power consumption device, evaluates the credibility of this operation based on the historical operation record or credit history of the power consumption device, and determines whether an energy dispatch operation is to be performed based on the credibility. If it determines that this energy dispatch operation is to be performed, it dispatches electrical energy to the power consumption device.

In the above embodiment, the energy dispatch instruction is generated based on the interaction information and is written into the blockchain network. Then, energy dispatch is performed via the energy network, so that the reliability and safety of the energy dispatch can be ensured, and thereby ensuring the normal operation of the local energy internet network.

In some embodiments of the present disclosure, the capability information written into the blockchain refers to the capability of an energy device, for example, whether the energy device can generate power or store energy, etc., and the energy device performs corresponding operations according to its own capability.

The demand information written into the blockchain network refers to the short-term energy demand or long-term energy demand of the energy device.

The supply information written into the blockchain network refers to the amount of energy the energy device can provide to other energy device, for example, how much electricity the device can generate or how much electricity can be discharged.

The identity information written into the blockchain network refers to the identification information of the energy device, which can be used to track or confirm the execution unit.

The type information written into the blockchain network refers to the type of power generation device, the type of power transmission device, the type of energy storage device, the type of transmission device, the type of power consumption device, the type of hybrid device, the type of AI or dedicated data analysis unit, etc.

The spatiotemporal attribute information written into the blockchain network refers to the physical location of energy device, such as latitude and longitude, and behavioral time information. For example, the power generation capacity of a photovoltaic power generation unit changes over time.

The regulative attribute information written into the blockchain network refers to whether the energy device can be regulated, such as peak-cut, peak-shift and other demand-side responses of the device, as well as the corresponding quantity and scope of regulation.

The response time information written into the blockchain network refers to the shortest time that the energy device can respond when receiving an operation instruction. For example, some energy storage units can start charging and discharging in milliseconds, and some energy storage devices respond in minutes.

From the capability information, demand information, supply information, identity information, type information, voltage information, current information, power information, energy information, spatiotemporal attribute information, regulative attribute information, and response time information of energy device, the production and consumption capacity, controllable capacity, etc. of the device can be determined. Energy transfer and value transfer can be negotiated between energy devices by means of energy information. For example, a certain energy device can discover a change trend of the transaction price and decide whether to increase the transaction price of energy or purchase and dump energy from other users to reduce its total cost of energy consumption and obtain high energy efficiency.

In some embodiments of the present disclosure, the energy information is transmitted over different communication channels of the communication network according to different classifications of the energy information. In this embodiment, information for different purposes is transmitted using different communication channels, which improves the information processing capability of the blockchain network while meeting the strict real-time requirement.

In some embodiments of the present disclosure, the hybrid equipment externally acts as a unit, and internally realizes information interaction and control between the transmission device, the power generation device, the energy storage device and the power consumption device using a real-time communication network system. The hybrid device exists as a production and consumption unit, which is both an energy production unit and an energy consumption unit, and can simultaneously reflect these two behaviors. Consumption behavior refers to the direct use of electricity from other units; production behavior refers to the ability to provide its own energy for external use.

In some embodiments of the present disclosure, a predetermined number of nodes in the blockchain network are consensus nodes. For example, units of the representative organization of interest are selected as consensus nodes based on a PoS (Proof of Work) algorithm or a DPoS (Delegated Proof of Stake) algorithm. By setting up consensus nodes, the efficiency of information interaction can be improved. In addition, the use of a general consensus mechanism can ensure data consistency and non-tampering.

In some embodiments, general blockchain mechanisms, such as the public/private key mechanism, data signature, etc., are used to ensure the credibility of the interacting parties and the credibility of the transaction.

In some embodiments of the present disclosure, the blockchain node module 120 writes energy information into the blockchain network by a central controller. The central controller maintains the energy blocks. In this embodiment, transactions go through a central controller that can coordinate the behavior of various energy devices.

In some other embodiments of the present disclosure, a blockchain-based energy internet system comprises a plurality of energy interaction apparatuses described above, wherein each of the energy interaction apparatuses is, for example, an intelligent energy device. In other embodiments, because the energy device does not have behavioral characteristics, that is, it does not have the ability to analyze data, the energy interaction apparatus is a controller separate from the energy device. The controller is, for example, a dedicated data analysis unit or artificial intelligence unit. In some embodiments, the dedicated data analysis unit is a computer cluster that can perform big data analysis, machine learning, etc. The artificial intelligence unit can analyze data and make decisions like a human.

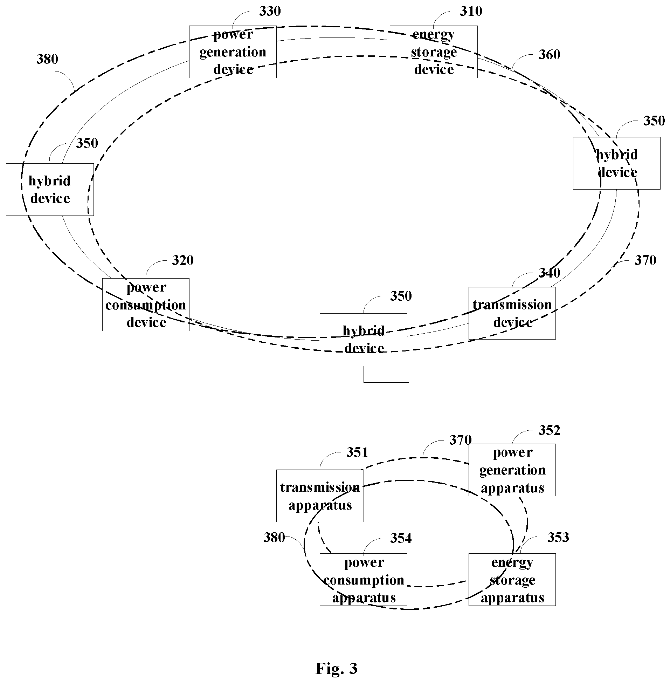

FIG. 3 is a schematic structural diagram of a blockchain-based energy internet system according to some embodiments of the present disclosure. In terms of the network topology, for a community, the system is composed of energy devices in homes and the community. In terms of engineering, the system is composed of energy devices in workshops and factories. For example, the energy internet system consists of an energy storage device 310, a power consumption device 320, a power generation device 330, a transmission device 340, and a hybrid device 350 that are located in a local area and have clear boundaries. The hybrid device comprises, for example, a transmission apparatus 351, a power generation apparatus 352, an energy storage apparatus 353, and a power consumption apparatus 354 and so on. Each device acts as a blockchain node and stores energy information to the blockchain network 360 via its own blockchain node module. Each energy device can adapt to internal and external environmental changes based on the interaction information on the blockchain, so that automated operation and maintenance, as well as transactions, can be realized.

In other embodiments of the present disclosure, the energy internet system further comprises a communication network 370. In some embodiments, the communication network is a fieldbus communication network, and each energy device transmits information via the fieldbus communication network. For the transmission apparatus, power generation apparatus, energy storage apparatus and power consumption apparatus in the hybrid device, information transmission is also carried out via the fieldbus network.

In other embodiments of the present disclosure, the energy internet system further comprises an energy network 380 capable of providing the flow of electricity, that is, energy dispatch is performed between energy devices via the energy network.

In some embodiments, any two or three of the blockchain network, communication network, and energy network are implemented by one network.

In the above embodiment, the local energy internet system can realize partial autonomy without a center and can realize the transparent flow of business information and the safe and reliable deposits.

In some embodiments of the present disclosure, the energy internet system further comprises a central controller, wherein the central controller is configured to maintain energy blocks, that is, transactions in the blockchain go through a central controller, which can coordinate the behavior of various energy devices.

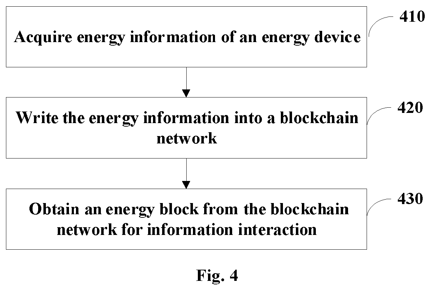

FIG. 4 is a schematic flowchart of a blockchain-based energy internet interaction method according to some embodiments of the present disclosure. The embodiments can be implemented by an energy device or a controller.

In step 410, energy information of an energy device is acquired. The energy device is an energy storage device, a power consumption device, a power generation device, a transmission device, or a hybrid device, wherein the hybrid device, as an integral device, comprises a transmission apparatus, a power generation apparatus, an energy storage apparatus, and a power consumption apparatus. The energy information comprises capability information, demand information, supply information, identity information, type information, voltage information, current information, power information, energy information, spatiotemporal attribute information, regulative attribute information, and response time information, etc.

In step 420, the energy information is written into a blockchain network. The blockchain network comprises a plurality of nodes. A predetermined number of nodes of the plurality of nodes in the blockchain network are consensus nodes. For example, if the energy device is an intelligent device, the energy device will upload its own energy information to the blockchain network as a blockchain node. The energy information will be released to various blockchain nodes in the blockchain network, and the blockchain nodes store the energy information as an energy block. In some embodiments, the energy information is written to an energy block as a transaction based on a smart contract.

In some embodiments, the energy information is written into the blockchain network by a central controller. The central controller maintains energy blocks.

In step 430, an energy block is obtained from the blockchain network for information interaction. The interaction information comprises, for example, control information, operation information, and so on. The energy block is the energy information stored on each of the plurality of nodes.

In the above embodiment, the energy information of the energy device is written into the blockchain network. Since each blockchain node stores the same energy information, it can ensure the immutability of critical interaction information during information interaction.

In some other embodiments of the present disclosure, information interaction is performed via a communication network. When high performance is pursued, the communication network is, for example, a communication network comprising a field bus. After information interaction, interaction information is written into the blockchain network. For example, a negotiated power supply relationship, a power use relationship and other agreement information is written into the blockchain network to realize the transparent flow of business information and ensure the reliability of business information deposits. The transmission apparatus, the power generation apparatus, the energy storage apparatus and the power consumption apparatus of inside the hybrid device exchange information via a communication network.

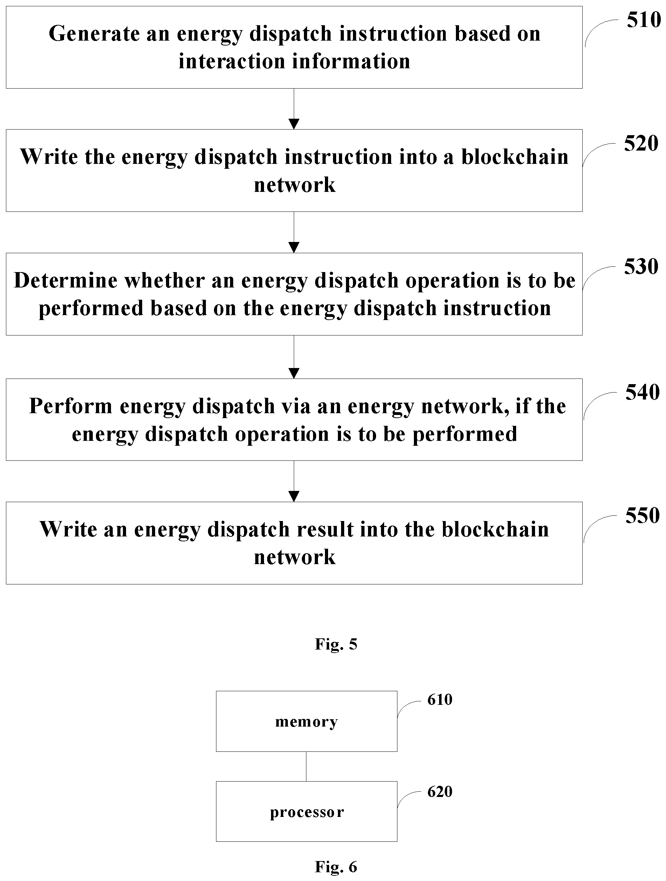

In some other embodiments of the present disclosure, the energy network is used to perform energy dispatch based on interaction information, and the specific implementation is shown in FIG. 5.

In step 510, an energy dispatch instruction is generated based on interaction information.

In step 520, the energy dispatch instruction is written into a blockchain network.

In step 530, based on the energy dispatch instruction, it is determined whether an energy dispatch operation is to be performed.

In step 540, energy dispatch is performed via an energy network, if the energy dispatch operation is to be performed.

In step 550, an energy dispatch result is written into the blockchain network.

For example, if a power consumption device needs 100 kwh of electric energy, and it is determined that power generation device C or energy storage device D can be required to provide 100kwh of electric energy based on interaction information, upon the generation of an energy dispatch instruction, the power consumption device will issue an energy dispatch instruction to the blockchain network. If energy storage device D cannot carry out this dispatch operation for some reasons, power generation device C can make a response via a fieldbus communication network and can dispatch 100kwh of electric energy to the power consumption device. Accordingly, power generation device C transmits 100kwh of electric energy to the power consumption device via the energy network, and the final energy dispatch result is stored to the blockchain network.

In the above embodiment, the energy dispatch instruction is generated based on the interaction information and is written into the blockchain network. Then, energy dispatch is performed via the energy network, so that the reliability and safety of the energy dispatch can be ensured, and thereby ensuring the normal operation of the local energy internet network.

In some embodiments of the present disclosure, the energy information is transmitted over different communication channels of the communication network according to different classifications of the energy information. In this embodiment, information for different purposes is transmitted using different communication channels, which improves the information processing capability of the blockchain network while meeting the strict real-time requirement.

In some embodiments of the present disclosure, a predetermined number of nodes in the blockchain network are consensus nodes. By setting up consensus nodes, the efficiency of information interaction can be improved. In addition, the use of a general consensus mechanism can ensure data consistency and non-tampering.

FIG. 6 is a schematic structural diagram of a blockchain-based energy interaction apparatus according to further embodiments of the present disclosure. The energy interaction apparatus comprises a memory 610 and a processor 620. The memory 610 may be a magnetic disk, flash memory or any other non-volatile storage medium. The memory is configured to store instructions of the corresponding the embodiments of the FIGS. 4-5. The processor 620 is coupled to memory 610 and is implemented as one or more integrated circuits, such as a microprocessor or microcontroller. The processor 620 is configured to execute instructions stored in the memory.

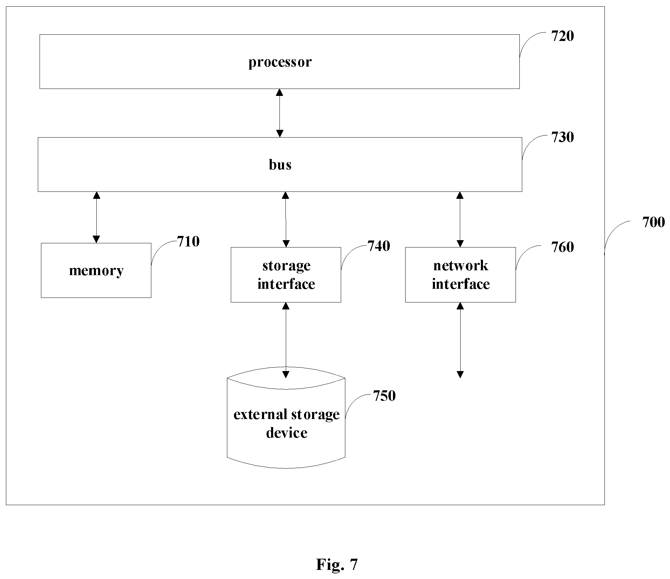

In some embodiments, as illustrated in FIG. 7, an energy interaction apparatus 700 comprises a memory 710 and a processor 720. The processor 720 is coupled to the memory 710 via a bus 730. The energy interaction apparatus 700 is further connected to an external storage device 750 via a storage interface 740 to access external data, and is further connected to a network or another computer system (not shown) via a network interface 760, the details of which will not described herein.

In this embodiment, through storing data instructions in memory and processing the above instructions using a processor, normal operation of the local energy internet network is ensured.

In other embodiments, the present disclosure further provides a computer-readable storage medium having computer program instructions stored thereon that, when executed by a processor, implement the steps of the methods of corresponding embodiments shown in FIGS. 4-5. One skilled in the art should understand that, the embodiments of the present disclosure may be provided as a method, an apparatus, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (comprising but not limited to disk storage, CD-ROM, optical memory, etc.) having computer-usable program code embodied therein.

The present disclosure is described with reference to flowcharts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing device to generate a machine such that the instructions executed by a processor of a computer or other programmable data processing device to generate means implementing the functions specified in one or more flows of the flowcharts and/or one or more blocks of the block diagrams.

The computer program instructions may also be stored in a computer readable memory device capable of directing a computer or other programmable data processing device to operate in a specific manner such that the instructions stored in the computer readable memory device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

Heretofore, the present disclosure has been described in detail. In order to avoid obscuring the concepts of the present disclosure, some details known in the art are not described. Based on the above description, those skilled in the art can understand how to implement the technical solutions disclosed herein.

Although some specific embodiments of the present disclosure have been described in detail by way of example, those skilled in the art should understand that the above examples are only for the purpose of illustration and are not intended to limit the scope of the present disclosure. It should be understood by those skilled in the art that the above embodiments may be modified without departing from the scope of the present disclosure. The scope of the disclosure is defined by the following claims.

## Claims

1. A blockchain-based energy internet interaction method, performed by an energy interaction apparatus, comprising:
acquiring energy information of an energy device (S410);
writing the energy information into a blockchain network (S420), wherein the blockchain network comprises a plurality of nodes, a predetermined number of nodes of the plurality of nodes in the blockchain network being consensus nodes;
obtaining an energy block from the blockchain network for information interaction via a communication network (430), wherein the energy block is the energy information stored on each of the plurality of nodes;
determining whether a first energy device is to transfer energy to a second energy device among other devices according to the energy information of the first energy device and the energy information of other devices acquired from energy blocks; and
releasing energy transfer information of the first energy device to the blockchain network, if it is determined that the first energy device is to transfer energy to the second energy device, wherein the energy transfer information comprises an Identity document (ID) of the second energy device,
wherein the second energy device makes a response after receiving the energy transfer information, while other energy devices do not make response.

2. The energy internet interaction method according to claim 1, further comprising:
performing energy dispatch by using an energy network based on interaction information; optionally
writing interaction information into a blockchain network.

3. The energy internet interaction method according to claim 2, further comprising:
generating an energy dispatch instruction based on the interaction information (510); and
writing the energy dispatch instruction into the blockchain network (S520).

4. The energy internet interaction method according to claim 3, further comprising:
determining whether an energy dispatch operation is to be performed based on the energy dispatch instruction (S530);
performing energy dispatch via the energy network if it is determined that the energy dispatch operation is to be performed (S540); and
writing a result of the energy dispatch into the blockchain network(S550).

5. The energy internet interaction method according to claim 1, wherein
depending on different classifications of the energy information, the energy information is transmitted over different communication channels of the communication network; optionally
the energy information comprises at least one of capability information, demand information, supply information, identity information, type information, voltage information, current information, power information, energy information, spatiotemporal attribute information, regulative attribute information, or response time information.

6. The energy internet interaction method according to any one of claims 1 to 5, wherein
the energy device is at least one of an energy storage device (310), a power consumption device (320), a power generation device (330), a transmission device (340), or a hybrid device (350), the hybrid device (350) comprising at least two of a transmission apparatus (351), a power generation apparatus (352), an energy storage apparatus (353), or a power consumption apparatus (354).

7. The energy internet interaction method according to claim 6, wherein
the transmission apparatus (351), the power generation apparatus (352), the energy storage apparatus (353), and the power consumption apparatus (354) exchange information via a communication network.

8. The energy internet interaction method according to any one of claims 1 to 5, wherein the energy interaction apparatus is a central controller.

9. Ablockchain-based energy interaction apparatus comprising:
a memory (610, 710); and
a processor (620, 720) coupled to the memory (610, 710), which is configured to execute the energy internet interaction method according to any one of claims 1 to 8 on a basis of instructions stored in the memory.

10. A blockchain-based energy internet system comprising a plurality of energy interaction apparatus according to claim 9,
wherein the plurality of energy interaction apparatuses are connected via a blockchain network;
the energy interaction apparatus is an energy device; or
the energy interaction apparatus is a controller.

11. The energy internet system according to claim 10, wherein
the controller is at least one of a dedicated data analysis unit or an artificial intelligence unit.

12. The energy internet system according to claims 10 or 11, further comprising at least one of a communication network, an energy network, or a central controller, wherein:
the communication network is configured to perform information interaction;
the energy network is configured to perform energy interaction; and
the central controller is configured to maintain energy blocks.

13. A non-transitory computer-readable storage medium on which computer program instructions are stored, which when executed by a processor implement the steps of the energy internet interaction method according to any one of claims 1 to 8.

## Patentansprüche

1. Blockchain-gestütztes Energieinternetinteraktionsverfahren, das von einer Energieinteraktionsvorrichtung durchgeführt wird, umfassend:
Erfassen von Energieinformationen eines Energiegeräts (S410);
Schreiben der Energieinformationen in ein Blockchain-Netzwerk (S420), wobei das Blockchain-Netzwerk eine Mehrzahl von Knoten umfasst, wobei eine vorbestimmte Anzahl von Knoten der Mehrzahl von Knoten in dem Blockchain-Netzwerk Konsensknoten sind;
Erhalten eines Energieblocks aus dem Blockchain-Netzwerk zur Informationsinteraktion über ein Kommunikationsnetz (430), wobei der Energieblock die auf jedem der Mehrzahl von Knoten gespeicherten Energieinformationen ist;
Bestimmen, ob ein erstes Energiegerät Energie zu einem zweiten Energiegerät unter anderen Geräten übertragen soll, gemäß den Energieinformationen des ersten Energiegeräts und den Energieinformationen anderer Geräte, die aus Energieblöcken erfasst werden; und
Freigeben von Energieübertragungsinformationen des ersten Energiegeräts an das Blockchain-Netzwerk, wenn bestimmt wird, dass das erste Energiegerät Energie an das zweite Energiegerät übertragen soll, wobei die Energieübertragungsinformationen ein Identitätsdokument (ID) des zweiten Energiegeräts umfassen,
wobei das zweite Energiegerät nach Empfangen der Energieübertragungsinformationen eine Antwort gibt, während andere Energiegeräte keine Antwort geben.

2. Energieinternetinteraktionsverfahren nach Anspruch 1, ferner umfassend:
Durchführen von Energieeinsatzplanung unter Verwendung eines Energienetzwerks auf Basis von Interaktionsinformationen; wahlweise
Schreiben von Interaktionsinformationen in ein Blockchain-Netzwerk.

3. Energieinternetinteraktionsverfahren nach Anspruch 2, ferner umfassend:
Erzeugen einer Energieeinsatzplanungsanweisung auf Basis der Interaktionsinformationen (510); und
Schreiben der Energieeinsatzplanungsanweisung in das Blockchain-Netzwerk (S520).

4. Energieinternetinteraktionsverfahren nach Anspruch 3, ferner umfassend:
Bestimmen, ob ein Energieeinsatzplanungsvorgang durchzuführen ist, auf Basis der Energieeinsatzplanungsanweisung (S530);
Durchführen von Energieeinsatzplanung über das Energienetzwerk, wenn bestimmt wird, dass der Energieeinsatzplanungsvorgang durchzuführen ist, (S540); und
Schreiben eines Ergebnisses der Energieeinsatzplanung in das Blockchain-Netzwerk (S550).

5. Energieinternetinteraktionsverfahren nach Anspruch 1, wobei
die Energieinformationen in Abhängigkeit von verschiedenen Einstufungen der Energieinformationen über verschiedene Kommunikationskanäle des Kommunikationsnetzes übertragen werden; wahlweise
die Energieinformationen mindestens eines von Fähigkeitsinformationen, Bedarfsinformationen, Versorgungsinformationen, Identitätsinformationen, Typeninformationen, Spannungsinformationen, Strominformationen, Leistungsinformationen, Energieinformationen, Informationen zu raum-zeitlichen Attributen, Informationen zu regulativen Attributen oder Reaktionszeitinformationen umfassen.

6. Energieinternetinteraktionsverfahren nach einem der Ansprüche 1 bis 5, wobei
das Energiegerät mindestens eines von einem Energiespeichergerät (310), einem Stromverbrauchsgerät (320), einem Stromerzeugungsgerät (330), einem Übertragungsgerät (340) oder einem Hybridgerät (350) ist, wobei das Hybridgerät (350) mindestens zwei von einer Übertragungsvorrichtung (351), einer Stromerzeugungsvorrichtung (352), einer Energiespeichervorrichtung (353) oder einer Stromverbrauchsvorrichtung (354) umfasst.

7. Energieinternetinteraktionsverfahren nach Anspruch 6, wobei
die Übertragungsvorrichtung (351), die Stromerzeugungsvorrichtung (352), die Energiespeichervorrichtung (353) und die Stromaufnahmevorrichtung (354) Informationen über ein Kommunikationsnetz austauschen.

8. Energieinternetinteraktionsverfahren nach einem der Ansprüche 1 bis 5, wobei die Energieinteraktionsvorrichtung eine zentrale Steuerung ist.

9. Blockchain-gestützte Energieinteraktionsvorrichtung, umfassend:
einen Speicher (610, 710); und
einen mit dem Speicher (610, 710) gekoppelten Prozessor (620, 720), der zum Ausführen des Energieinternetinteraktionsverfahrens nach einem der Ansprüche 1 bis 8 auf Basis von in dem Speicher gespeicherten Anweisungen konfiguriert ist.

10. Blockchain-gestütztes Energieinternetsystem, umfassend eine Mehrzahl von Energieinteraktionsvorrichtungen nach Anspruch 9,
wobei die Mehrzahl von Energieinteraktionsvorrichtungen über ein Blockchain-Netzwerk verbunden ist;
die Energieinteraktionsvorrichtung ein Energiegerät ist; oder
die Energieinteraktionsvorrichtung eine Steuerung ist.

11. Energieinternetsystem nach Anspruch 10, wobei
die Steuerung zumindest eines von einer dedizierten Datenanalyseeinheit oder einer Künstliche-Intelligenz-Einheit ist.

12. Energieinternetsystem nach Anspruch 10 oder 11, ferner umfassend mindestens eines von einem Kommunikationsnetz, einem Energienetzwerk oder einer zentralen Steuerung, wobei:
das Kommunikationsnetz zum Durchführen von Informationsinteraktion konfiguriert ist;
das Energienetzwerk zum Durchführen von Energieinteraktion konfiguriert ist; und
die zentrale Steuerung zum Verwalten von Energieblöcken konfiguriert ist.

13. Nichtflüchtiges computerlesbares Speichermedium, auf dem Computerprogrammanweisungen gespeichert sind, die bei Ausführung durch einen Prozessor die Schritte des Energieinternetinteraktionsverfahrens nach einem der Ansprüche 1 bis 8 implementieren.

## Revendications

1. Procédé d'interaction sur l'Internet de l'énergie basé sur une blockchain, effectué par un appareil d'interaction énergétique, comprenant :
acquérir des informations sur l'énergie d'un dispositif énergétique (S410) ; écrire les informations sur l'énergie dans un réseau de blockchain (S420), dans lequel le réseau de blockchain comprend une pluralité de nœuds, un nombre prédéterminé de nœuds de la pluralité de nœuds dans le réseau de blockchain étant des nœuds de consensus ;
obtenir un bloc énergétique du réseau de blockchain pour une interaction d'information via un réseau de communication (430), dans lequel le bloc énergétique est les informations sur l'énergie stockées sur chacun de la pluralité de nœuds ;
déterminer si un premier dispositif énergétique doit transférer de l'énergie à un deuxième dispositif énergétique parmi d'autres dispositifs conformément aux informations sur l'énergie du premier dispositif énergétique et aux informations sur l'énergie d'autres dispositifs acquises de blocs énergétiques ; et
diffuser les informations de transfert d'énergie du premier dispositif énergétique au réseau de blockchain, s'il est déterminé que le premier dispositif énergétique doit transférer de l'énergie au deuxième dispositif énergétique, dans lequel les informations de transfert d'énergie comprennent un document d'Identité (ID) du deuxième dispositif énergétique,
dans lequel le deuxième dispositif énergétique fait une réponse après avoir reçu les informations de transfert d'énergie, tandis que d'autres dispositifs énergétiques ne font pas de réponse.

2. Procédé d'interaction sur l'Internet de l'énergie selon la revendication 1, comprenant en outre :
exécuter un acheminement d'énergie en utilisant un réseau énergétique sur la base des informations d'interaction ; optionnellement
écrire les informations d'interaction dans un réseau de blockchain.

3. Procédé d'interaction sur l'Internet de l'énergie selon la revendication 2, comprenant en outre :
générer une instruction d'acheminement d'énergie sur la base des informations d'interaction (510) ; et
écrire l'instruction d'acheminement d'énergie dans le réseau de blockchain (S520).

4. Procédé d'interaction sur l'Internet de l'énergie selon la revendication 3, comprenant en outre :
déterminer si une opération d'acheminement d'énergie doit être effectuée sur la base de l'instruction d'acheminement d'énergie (S530) ;
effectuer l'acheminement d'énergie via le réseau énergétique s'il est déterminé que l'opération d'acheminement d'énergie doit être effectuée (S540) ; et
écrire un résultat de l'acheminement d'énergie dans le réseau de blockchain (S550).

5. Procédé d'interaction sur l'Internet de l'énergie selon la revendication 1, dans lequel :
en fonction des différentes classifications des informations énergétiques, les informations sur l'énergie sont transmises sur des canaux de communication différents du réseau de communication ; optionnellement
les informations sur l'énergie comprennent au moins les unes d'entre des informations de capabilité, des informations de demande, des informations d'approvisionnement, des informations d'identité, des informations de type, des informations de tension, des informations de courant, des informations de puissance, des informations d'énergie, des informations d'attribut spatiotemporel, des informations d'attribut réglementaire ou des informations de temps de réponse.

6. Procédé d'interaction sur l'Internet de l'énergie selon l'une quelconque des revendications 1 à 5, dans lequel
le dispositif énergétique est au moins l'un d'entre un dispositif de stockage d'énergie (310), un dispositif de consommation d'énergie (320), un dispositif de génération de puissance (330), un dispositif de transmission (340), ou un dispositif hybride (350), le dispositif hybride (350) comprenant au moins deux d'entre un appareil de transmission (351), un appareil de génération de puissance (352), un appareil de stockage d'énergie (353), ou un appareil de consommation de puissance (354).

7. Procédé d'interaction sur l'Internet de l'énergie selon la revendication 6, dans lequel :
l'appareil de transmission (351), l'appareil de génération de puissance (352), l'appareil de stockage d'énergie (353), et l'appareil de consommation de puissance (354) échangent des informations via un réseau de communication.

8. Procédé d'interaction sur l'Internet de l'énergie selon l'une quelconque des revendications 1 à 5, dans lequel l'appareil d'interaction énergétique est un contrôleur central.

9. Appareil d'interaction énergétique basé sur une blockchain comprenant :
une mémoire (610, 710) ; et
un processeur (620, 720) couplé à la mémoire (610, 710), qui est configuré pour exécuter le procédé d'interaction sur l'Internet d'énergie selon l'une quelconque des revendications 1 à 8 sur une base d'instructions stockées dans la mémoire.

10. Système d'Internet de l'énergie basé sur une blockchain comprenant une pluralité d'appareils d'interaction énergétique selon la revendication 9,
dans lequel la pluralité d'appareils d'interaction énergétique sont connectés via un réseau de blockchain ;
l'appareil d'interaction énergétique est un dispositif énergétique ; ou
l'appareil d'interaction énergétique est un contrôleur.

11. Système d'Internet de l'énergie basé selon la revendication 10, dans lequel
le contrôleur est au moins l'une d'entre une unité d'analyse de données spécialisée ou une unité d'intelligence artificielle.

12. Système d'Internet de l'énergie selon la revendication 10 ou 11, comprenant en outre au moins l'un d'entre un réseau de communication, un réseau énergétique, ou un contrôleur central, dans lequel :
le réseau de communication est configuré pour effectuer une interaction d'information ;
le réseau énergétique est configuré pour effectuer une interaction énergétique ; et
le contrôleur central est configuré pour maintenir des blocs énergétiques.

13. Support de stockage non transitoire lisible par ordinateur sur lequel des instructions de programme informatique sont stockées, qui lorsque exécutées par un processeur mettent en œuvre les étapes du procédé d'interaction sur l'Internet de l'énergie selon l'une quelconque des revendications 1 à 8.
